# EUROPEAN PATENT SPECIFICATION

(11) **EP 0 872 006 B1**
(45) Date of publication and mention of the grant of the patent: **24.01.2001**
(21) Application number: 97950014.7
(22) Date of filing: 17.10.1997
(51) Int. Cl.: H02K 5/12, H02K 5/04, H02K 5/02, H02K 7/14, F04D 13/06, F04D 13/02, F04D 29/62, F04D 29/10

(54) **ELECTRIC MOTOR FRAME SUITABLE FOR BEING COUPLED TO A PUMP**
GEHÄUSE FÜR ELEKTROMOTOR ZUR VERBINDUNG MIT EINER PUMPE
BATI DE MOTEUR ELECTRIQUE POUVANT ETRE COUPLE A UNE POMPE

(30) Priority: 22.10.1996 IT VI960165
(43) Date of publication of application: 21.10.1998
(73) Proprietor: CALPEDA S.p.A., I-36050 Montorso Vicentino (VI) (IT)
(72) Inventor: FRIGHETTO, Gianfranco, I-36071 Arzignano (IT)
(74) Representative: Bonini, Ercole
(86) International application number: EP9705733
(87) International publication number: WO9818190

(56) References cited:
- DE-B- 1 115 356
- FR-A- 2 027 254

## Description

The invention concerns an electric motor frame suitable for being coupled to a motor pump.

It is well known that motor pumps are machines used for lifting water or, more generally, for transporting fluids, in which it is possible to distinguish a part consisting of an electric motor and another part making up the real pump with the casing, inside which there is an impeller driven by the electric motor.

Between the pump and the electric motor a connection member is generally provided, which connects pump and motor and is built so that the part that is coupled to the motor closes the motor itself and therefore is shaped as a motor shield or cover, while the part that is coupled to the pump is substantially flat and is suitable for housing the impeller in its proximity and for connecting to the pump casing. It is obvious that on the pump side said connection member is at least partially in contact with the fluid pumped by the pump itself.

It is therefore necessary that the material used to construct said connection member be compatible with the fluid transported by the pump, in particular with regard to chemical resistance.

According to a well known technique, said connection members between motor and pump, which in the technical language of this sector are also called "lantern brackets", are made of cast iron.

The compatibility of this material with the pumped fluid is very often acceptable. However, for certain applications, for example if the pumping is not frequent or in case of pumps with reduced axial and radial clearances between fixed part and impeller, the use of cast iron is not recommended, since the contact between cast iron and the still water contained in the pump casing results in the formation of rust and, in case of prolonged inactivity of the pump, can also cause the locking of the inner parts.

Other disadvantages connected with the use of cast iron for the construction of the connection member are the high cost and weight of this material, due to the fact that considerable thicknesses are required.

Furthermore, even using the most modern casting techniques, blowholes are often present on the connection member, which makes it necessary to reject the piece, sometimes even after the mechanical processing.

In some applications, in order to avoid the contact of the connection member between motor and pump with the pumped fluid, said member is divided in two parts: one part made of material that is compatible with the fluid on the pump side and another part made of less valuable material on the motor side. This kind of construction, however, increases production costs, since it is necessary to add machined seats in order to be able to join the two parts with precision and this must be made besides the normal processing.

According to another technique employed in the sector, the connection members between motor and pump are made in aluminium die-casting, with an insert made of material suitable for contact with the fluid positioned on the pump side. Said insert can be made of brass, or stainless steel or, in any case, of any material that is not subject to deterioration. Said insert is joined by means of screws or other mechanical parts, or it is incorporated in the connection member during the die-casting process.

Though representing an improvement in comparison with the technique in which cast iron is employed, the kind of technical solution mentioned above does not eliminate the necessity to construct a mechanical connection member separated from motor and pump, which therefore must be machined separately and then coupled to either the pump and the motor frame by means of screws or stay bolts.

The main goal of the present invention is the implementation of a motor pump without a separate connection member between motor and pump. More precisely, the purpose is the implementation of a motor pump in which the motor and the pump casing are directly joined together, with no need for an intermediate connection member.

A further goal of the invention is to significantly reduce the costs of the material used and of the machining process necessary to obtain the motor pump unit.

Another goal is the reduction of the number of elements that make up the motor pump unit.

All the goals mentioned above and others that will be better highlighted here below are achieved through the implementation of an electric motor frame, comprising a tubular body suitable for housing at least one pack of stator core laminations of said electric motor and that, according to the contents of claim 1, is characterized in that it is provided with a bottom wall integral with the frame at one end of said body, said bottom wall being provided with at least one housing suitable for receiving a bearing of the electric motor rotor on the inner side of the frame and with a plurality of holes suitable for fixing a pump casing to said wall on the outer side, said outer side being suitable for housing an insert made of a material that does not deteriorate through the contact with the fluid pumped by the pump, said insert being provided with at least one surface suitable for closing the pump casing and, on its central area, with a hole suitable for the passage of the driving shaft that supports the pump impeller and with a housing suitable for receiving a mechanical seal.

To advantage, according to the present invention the construction of an electric motor frame with a bottom wall as described above can be carried out, for example, through die-casting. The special material suitable for the contact with the fluid pumped by the pump can be an insert to be put inside the mould during the die-casting. In this way a single piece is obtained, made up by the frame with a cover on the pump side and with the housing for the closing of the pump casing on said cover.

One of the most evident advantages is the reduction of the number of pieces of which the motor pump unit is made.

Another advantage is the reduction of the machining processes and their increased precision. In fact, the frame constructed according to the present invention can be machined through a single positioning on the machine tool, by means of special tools that work all the reference and coupling seats both on the side that is to be coupled with the further cover of the motor and on the pump casing side.

Obviously, a single clamping of the rough frame for the execution of all the machining processes ensures the coplanarity and perfect alignment of all the machined surfaces. Further, production times are considerably reduced, since in the case of the present invention a single piece, that is, the frame, is machined instead of two, that is, frame and connection member. Further, the coupling of the connection member between motor and pump needs not be carried out, since said member is incorporated in the electric motor frame. This ensures time saving and the use of fewer pieces for the assembly.

Further advantages and particular features of the invention will be better highlighted in the description of a favourite application among many of the invention, illustrated in the attached drawings, wherein:
- Fig. 1 shows a section of the frame object of the present invention;
- Fig. 2 is a front view of the frame object of the present invention seen from the pump side.

With reference to the figures indicated above, it can be observed that the electric motor frame, indicated as a whole by 1, in the example is made of die-cast aluminium and comprises a body 2 provided with a cylindrical hole suitable for the forced introduction of a stator, indicated by 3, formed by stator core laminations and by an electrical winding. On the side opposite to that on which the body 2 is coupled to the pump, the edge of said body 2 is provided with a seat 21 for the coupling of a cover, or shield, of the motor not represented in the figure. On the opposite side the body 2 is provided with a bottom wall 4 that is obtained during the die-casting of the frame and is integral with the frame itself.

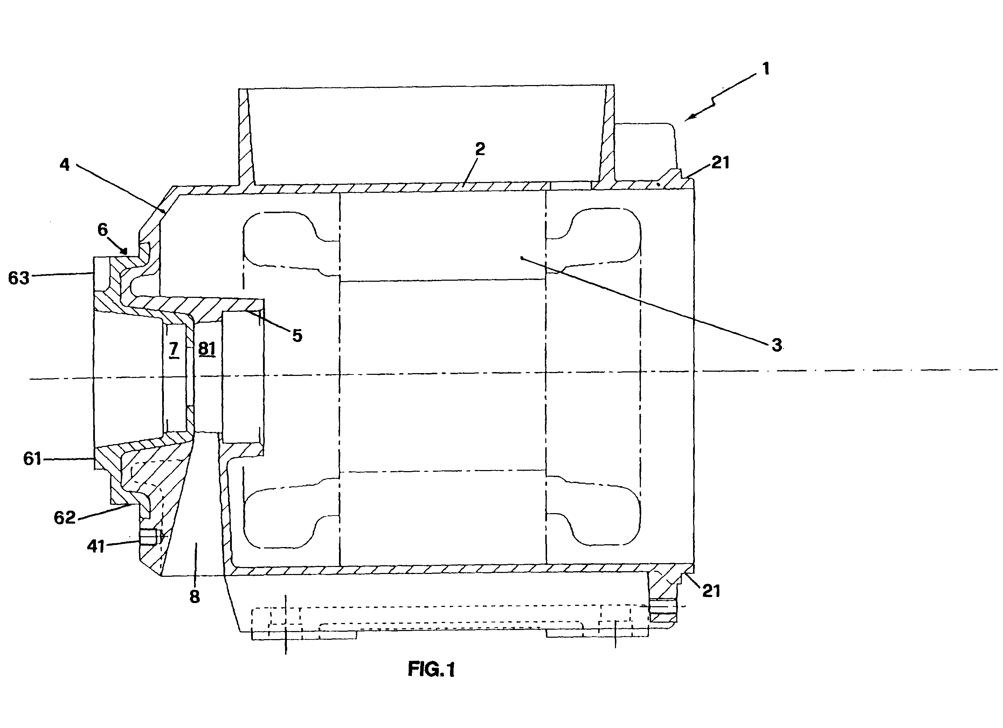

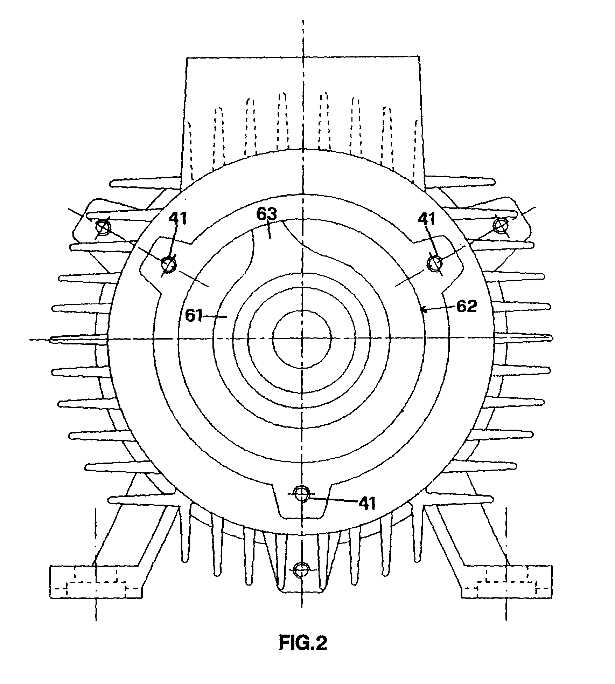

The wall 4 is configured so that it comprises, on the inner side of the frame, a housing 5 suitable for receiving a bearing of the electric motor rotor. The outer side of said bottom wall, with respect to the frame, is provided with a plurality of holes, indicated by 41 in Fig. 1 and in Fig. 2, which are threaded and suitable for housing screws for the fixing of the pump casing that is not represented in the figures.

Further, always on the outer side of the wall 4, an insert indicated as a whole by 6 is provided, which is made of a material suitable for the contact with the pumped fluid and has a substantially flat surface 61, which is perpendicular to the frame axis and, in the case represented by the example, is shaped in such a way as to be suitable for receiving the pump casing and the impeller of a peripheral pump. In fact, a sliding impeller surface is provided (the impeller is not represented in the figure) that, as shown in Fig. 2, is characterized by the annular shape and is provided with a separating baffle 63. The insert 6 contains also the centering surface 62 of the pump casing, so that the whole surface wet by the fluid and belonging to the frame 1 is made up by the insert 6. The insert 6 is provided at its center with a hole suitable for the passage of the driving shaft that supports the pump impeller and also with a housing 7 suitable for receiving the mechanical seal of the pump.

According to the application shown in Fig. 1, it can be observed that the frame 1 is also provided with a port 8 that ensures the communication between the outside and the chamber 81 delimited by the housing chamber 5 of the electric motor bearing and by the housing chamber 7 of the mechanical seal. Obviously, thanks to the presence of the port 8, any fluid leakage can be discharged and there is no fluid overflow into the electric motor through the rotor bearing.

The shape of frame as shown in the example drawings ensures the coupling of the frame object of the invention to the machine tool with a single clamp, for example by means of an expansible spindle, so that the frame can be machined with one tool on one side to create the reference surface 21 for the coupling of the motor cover and with one or more special tools on the other side to finish all the surfaces and in particular the coupling surfaces of the pump casing on the inserts, together with the threads and the housing of the bearing 5.

According to the invention, it is no more necessary to provide either a mechanical connection element between the motor and the pump, and mechanical connecting parts, such as screws, to fix the connection element to the motor.

Obviously, the motor frame 1 can be carried out with or without feet. It can also be made of materials different from aluminium or through processes different from die-casting, in which, in any case, the bottom wall must be integral with the casing and suitable for housing the pump casing directly from the outside, without further intermediate members.

## Claims

1. Electric motor frame (1), suitable to be coupled to a pump, comprising a tubular body (2) suitable for housing at least one pack of stator core laminations (3) of said electric motor and **characterized in that** it is provided with a bottom wall (4) integral with the frame itself at one end of said body, said bottom wall being provided with at least one housing (5) suitable for receiving a bearing of the electric motor rotor on the inner side of the frame and with a plurality of holes (41) suitable for fixing a pump casing to said wall on the outer side, said outer side being suitable for housing an insert (6) made of a material that does not deteriorate through the contact with the fluid pumped by the pump, said insert (6) being provided with at least one surface (62) for centering the pump casing and, on its central area, with a hole suitable for the passage of the driving shaft that supports the pump impeller and with a housing (7) suitable for receiving a mechanical seal.

2. Motor frame (1) according to claim 1, **characterized in that** it is made of aluminium and that the insert (6) provided on the outer side of the bottom wall (4) of the frame (1) is partially incorporated in said bottom wall during the die-casting of said frame.

3. Motor frame (1) according to claim 2, **characterized in that** the sliding surface (61) of the impeller belonging to said insert is flat and substantially perpendicular to the axis of the motor frame, said surface defining, with the pump casing and the impeller, a peripheral pump.

4. Motor frame (1) according to one of the claims from 1 to 3, **characterized in that** its bottom is provided with a port (8) for any fluid leakage from the pump, said port ensuring the communication between the outside and a chamber (81) defined by the housing of the bearing and the housing of the mechanical seal.

## Patentansprüche

1. Elektromotorgehäuse (1), dazu geeignet, mit einer Pumpe gekoppelt zu werden, folgendes umfassend: einen röhrenförmigen Körper (2), dazu geeignet, wenigstens ein Ständerblechpaket (3) des Elektromotors aufzunehmen und **dadurch gekennzeichnet**, dass es mit einer Bodenwand (4) versehen ist, die an einem Ende des Körpers mit dem Gehäuse selbst eine Einheit bildet, wobei diese Bodenwand mit wenigstens einem Sitz (5) versehen ist, dem geeignet ist, ein Lager des Elektromotorrotors aufzunehmen sowie mit einer Vielzahl von Löchern (41) für die Befestigung eines Pumpengehäuses an der Außenseite der Wand, wobei diese Außenseite geeignet ist, einen Einsatz (6) aufzunehmen, der aus einem Werkstoff besteht, welcher nicht durch den Kontakt mit der durch die Pumpe gepumpten Flüssigkeit Schaden nimmt, wobei dieser Einsatz (6) wenigstens eine Fläche (62) zur Zentrierung des Pumpengehäuses sowie in seinem zentralen Bereich ein Loch für den Durchgang der Antriebswelle, die das Pumpenlaufrad trägt, und einen Sitz (7) für eine Gleitringdichtung aufweist.

2. Motorgehäuse (1) gemäß Patentanspruch 1, **dadurch gekennzeichnet,** dass es aus Aluminium besteht und dass der Einsatz (6) an der Außenseite der Bodenwand (4) des Gehäuses (1) während des Druckgießens des Gehäuses teilweise in diese Bodenwand integriert wurde.

3. Motorgehäuse (1) gemäß Patentanspruch 2, **dadurch gekennzeichnet**, dass die zu diesem Einsatz gehörende Gleitfläche (61) des Laufrads flach und im Wesentlichen lotrecht zur Achse des Motorgehäuses ist, wobei diese Fläche mit dem Pumpengehäuse und dem Laufrad eine Peripheralpumpe bildet.

4. Motorgehäuse (1) gemäß Patentanspruch 1 oder 3, **dadurch gekennzeichnet**, dass sein Boden eine Öffnung (8) für jegliche Flüssigkeitsleckage aus der Pumpe aufweist, wobei diese Öffnung die Kommunikation zwischen der Außenseite und einer durch den Lagersitz und den Sitz der Gleitringdichtung gebildeten Kammer (81) bewirkt.

## Revendications

1. Un bâti pour moteur électrique (1) indiqué pour être relié à une pompe, comprenant un corps tubulaire (2) indiqué pour loger au moins un paquet de tôles fines du stator (3) dudit moteur électrique et **catactérisé en ce qu'**il est équipé d'une paroi inférieure (4) solidaire avec le bâti même sur une extrémité dudit corps, ladite paroi inférieure étant munie d'au moins un logement (5) indiqué pour recevoir un roulement du rotor du moteur électrique sur le côté intérieur du bâti et d'une pluralité de trous (41) indiqués pour fixer un bâti de pompe à ladite paroi sur le côté extérieur, ledit côté extérieur étant indiqué pour loger un élément d'insertion (6) composé de matériel qui ne subit pas de détérioration au moment du contact avec le fluide pompé par la pompe, ledit élément d'insertion (6) étant équipé d'au moins une surface (62) pour le centrage du bâti de pompe et, dans sa partie centrale, d'un trou indiqué pour le passage de l'arbre moteur qui soutient la roue de pompe et d'un logement (7) indiqué pour recevoir un joint d'étanchéité mécanique.

2. Un bâti pour moteur électrique (1) selon la revendication 1, **caractérisé en ce qu'**il est composé en aluminium et que l'élément d'insertion (6) qui se trouve sur le côté extérieur de la paroi inférieure (4) du bâti (1) est partiellement inséré dans ladite paroi inférieure durant le moulage en coquille dudit bâti.

3. Un bâti pour moteur électrique (1) selon la revendication 2, **caractérisé en ce que** la surface coulissante (61) de la roue appartenant audit élément est plane et essentiellement perpendiculaire à l'axe du bâti du moteur, ladite surface définissant, avec le bâti de pompe et la roue, une pompe périphérique.

4. Un bâti pour moteur électrique (1) selon les revendications de 1 à 3, **caractérisé en ce que** sa partie Inférieure est munie d'une ouverture (8) pour la fuite de n'importe quel fluide de la pompe, ladite ouverture assurant la communication entre l'extérieur et une chambre (81) définie par le logement du roulement et le logement du joint d'étanchéité mécanique.
